# EUROPÄISCHE PATENTSCHRIFT

(11) **EP 1 979 129 B1**
(45) Veröffentlichungstag und Bekanntmachung des Hinweises auf die Patenterteilung: **07.10.2009**
(21) Anmeldenummer: 06828714.3
(22) Anmeldetag: 20.12.2006
(51) Int. Cl.: B23Q 7/14, B65G 35/06

(54) **WERKSTÜCKTRÄGER MIT ZWEI FÜHRUNGSEINRICHTUNGEN**
TOOL CARRIER WITH GUIDE DEVICES
PORTE-PIECE AVEC DEUX DISPOSITIFS DE GUIDAGE

(30) Priorität: 16.01.2006 DE 102006002081
(43) Veröffentlichungstag der Anmeldung: 15.10.2008
(73) Patentinhaber: Robert Bosch GmbH, 70469 Stuttgart (DE)
(72) Erfinder: SKLJAROW, Paul, 71701 Schwieberdingen (DE); LUDWIG, Peter, 72072 Tübingen (DE); LINDEMANN, Uwe, 71088 Holzgerlingen (DE); PORZER, Volker, 73666 Baltmannsweiler (DE); BÜSING, Boris, 70376 Stuttgart (DE)
(74) Vertreter: Maiß, Harald
(86) Internationale Anmeldenummer: PCT/DE2006/002285
(87) Internationale Veröffentlichungsnummer: WO 2007/079709

(56) Entgegenhaltungen:
- DE-A1- 3 731 362
- US-A1- 2004 182 680
- US-B1- 6 758 320

## Beschreibung

Die vorliegende Erfindung betrifft eine flexible Bearbeitungsstraße mit einem Werkstückträger nach dem Oberbegriff von Anspruch 1 (siehe, z.B., DE-37 31 362-A).

Derartige Werkstückträger sind aus dem Stand der Technik zum Transport von Werkstücken in Bearbeitungsanlagen, wie etwa Kleinteilmontagen und dergleichen, bekannt. Dabei ist ein Werkstückträger in der Regel einer Art von Transportvorrichtung zugeordnet, an deren Führungsgeometrie er angepasst ist.

Nachteilig an den bekannten Werkstückträgern ist ihre mangelnde Flexibilität, so dass gleiche Werkstückträger in der Regel stets nur an gleichen Transportvorrichtungen bzw. mit der gleichen Führungsgeometrie einsetzbar sind.

Es ist daher Aufgabe der vorliegenden Erfindung, eine Bearbeitungsstraße mit einem Werkstückträger der eingangs genannten Art anzugeben, welcher mit zwei unterschiedlichen Transportvorrichtungen einsetzbar ist.

Diese Aufgabe wird erfindungsgemäß durch eine Bearbeitungsstraße nach Anspruch 1 gelöst.

Somit kann der Werkstückträger sowohl an der ersten als auch an der zweiten Führungsgeometrie, die unterschiedlichen Transportvorrichtungen zugeordnet sein können, sicher und korrekt längs derselben Führungsrichtung geführt werden, so dass der erfindungsgemäße Werkstückträger in einem breiteren Bereich einsetzbar ist als herkömmlich bekannte Werkstückträger.

Mit "Führung" im Sinne der vorliegenden Anmeldung ist die Führung einer Bewegung des Werkstückträgers längs des Verlaufs einer unverzweigten Transportbahn bezeichnet.

Grundsätzlich kann die Führungseinrichtung eine beliebige Art von Führungseinrichtung sein. Vorteilhafterweise ist zur besonders einfachen Ausbildung der Führungseinrichtung der Werkstückträger derart ausgebildet, dass wenigstens eine Führungseinrichtung, vorteilhafterweise jeweils die erste und die zweite Führungseinrichtung, eine in Führungsrichtung verlaufende Anlagefläche, aufweist, welche einer Führungsgeometrie zugeordnet und zur gleitenden Anlage an eine Gegenanlagefläche derselben ausgebildet ist. Die Führung des Werkstückträgers erfolgt dann im Wesentlichen durch gleitende Anlage von Anlagefläche und Gegenanlagefläche aneinander. Die Anlagefläche kann im einfachsten Falle eben sein, kann jedoch auch eine beliebige Querschnittskontur in einer zur Führungsrichtung orthogonalen Querschnittskontur aufweisen.

Grundsätzlich kann es ausreichen, dass der Werkstückträger lediglich eine Anlagefläche pro Führungseinrichtung aufweist. Eine besonders sichere Führung des Werkstückträgers ist jedoch dadurch möglich, dass die wenigstens eine Führungseinrichtung, vorteilhafterweise beide Führungseinrichtungen, zwei in im Wesentlichen in entgegengesetzte Richtungen weisende in Führungsrichtung verlaufende Anlageflächen aufweist, von welchen jede zur gleitenden Anlage an je eine Gegenanlagefläche einer Führungsgeometrie ausgebildet ist. Dabei sollen Flächen im Sinne der vorliegenden Ahmeldung dann als in entgegengesetzte Richtung weisend gelten, wenn von ihren Normalenvektoren Vektorenkomponenten in entgegengesetzte Richtung verlaufen. Die Normalenvektoren jeder Fläche sind hierzu in linear unabhängige Vektorenkomponenten des gleichen Koordinatensystems zu zerlegen.

In dem o.g. Fall von zwei in entgegengesetzte Richtungen weisenden Anlageflächen bildet der Abstand der Anlageflächen orthogonal zur Führungsrichtung voneinander eine Spurweite, so dass die erste Führungseinrichtung eine erste Führungs-Spurweite und die zweite Führungseinrichtung eine von der ersten Führungs-Sputweite verschiedenen zweite Führungs-Spurweite aufweist. Bei in entgegengesetzte Richtung weisenden Anlageflächen, die zueinander einen Winkel einschließen, soll zur Bestimmung einer Spurweite der Abstand zwischen den Flächenschwerpunkten der jeweiligen in entgegengesetzte Richtungen weisenden Anlageflächen herangezogen werden.

Eine besonders günstige, weil formschlüssige Führung des Werkstückträgers kann dadurch erhalten werden, dass wenigstens eine Führungseinrichtung aus der ersten und der zweiten Führungseinrichtung wenigstens eine in Führungsrichtung verlaufende Führungsnut oder wenigstens eine in Führungsrichtung verlaufende Führungsschiene aufweist.

Besonders einfach und kostengünstig in der Herstellung kann die oben bezeichnete Anlagefläche an einem Außenrandabschnitt des Werkstückträgers ausgebildet sein.

Damit der Werkstückträger in zwei zueinander orthogonale Führungsrichtungen geführt werden kann, d.h. von zwei orthogonal zueinander angeordneten Transportvorrichtungen transportiert werden kann, kann er derart ausgebildet sein, dass er zueinander orthogonale Anlageflächen oder/und Führungsnuten oder/und Führungsschienen aufweist, vorzugsweise zueinander orthogonale Anlageflächenpaare oder/und Führungsnutenpaare oder/und Führungsschienenpaare aufweist.

Die oben bezeichneten Ausbildungen der Führungseinrichtungen sind auch miteinander kombinierbar, so dass beispielsweise die eine Führungseinrichtung eine Führungsnut oder Führungsschiene und die jeweils andere Führungseinrichtung einen als Anlagefläche ausgebildeten Außenrandabschnitt des Werkstückträgers aufweisen kann, wodurch ein kompakter Werkstückträger mit geringem Bauvolumen erhalten werden kann.

Die unterschiedlichen Transportvorrichtungen, welche die einzelnen Werkstückträger in der Bearbeitungsstraße transportieren, können sich nicht nur hinsichtlich der vorhandenen Führungsgeometrien, sondern, auch hinsichtlich der verwendeten Fördermittel unterscheiden. Beispielsweise können Transportvorrichtungen Transportbänder aufweisen, die jedoch bei unterschiedlichen Transportvorrichtungen in unterschiedlicher Weise relativ zu den Führungsgeometrien angeordnet sind. Damit ein Werkstückträger auch von unterschiedlich gestalteten Fördermitteln unterschiedlicher Transportvorrichtungen gefördert werden kann, ist es vorteilhaft, wenn er eine erste Transportangriffsfläche aufweist, welche zum Transporteingriff mit einer ersten Transportvorrichtung ausgebildet ist, und wenn er eine von der ersten verschiedene zweite Transportangriffsfläche aufweist, welche zum Transporteingriff mit einer von der ersten verschiedenen zweiten Transportvorrichtung ausgebildet ist.

Besonders vorteilhaft werden als Fördermittel sogenannte Doppelgurt- oder Doppelbandförderer eingesetzt, welche zwei orthogonal zu ihrer Förderrichtung mit Abstand voneinander angeordnete Förderbänder aufweisen. Zwischen diesen kann dann beispielsweise ein selektiv aktivierbarer Anschlag für den Werkstückträger angeordnet sein. Alternativ kann eines der Förderbänder durch passive Fördermittel, wie etwa nicht angetriebene Förderrollen, ersetzt sein. In diesem Fall ist die oben bezeichnete Transportangriffsfläche vorteilhafterweise mehrteilig ausgebildet, so dass Transportangriffsteilflächen jeweils einem Teilfördermittel, etwa einem Förderband oder dgl., zugeordnet sein können.

Für den Fall zweiteiliger Fördermittel wird eine am Abstand der beiden Teilfördermittel: Förderband oder passive Fördermittel, orientierte Abmessung einer ggf. mehrteiligen Transportangriffsfläche als Transport-Spurweite bezeichnet. Dabei ist es für die Ausbildung des Werkstückträgers zum Transporteingriff mit unterschiedlichen Transportvorrichtungen vorteilhaft, wenn vorzugsweise die erste Transportangriffisfläche eine erste Transport-Spurweite aufweist und die zweite Transportangriffsfläche eine von der ersten Transport-Spurweite verschiedene zweite Transport-Spurweite aufweist.

Der Werkstückträger ist besonders einfach in Transporteingriff mit einer Transportvorrichtung bringbar, wenn die erste oder/und die zweite Transportangriffsfläche eine in Schwerkraftwirkungsrichtung weisende Auflagefläche ist.

Dabei kann ein Werkstückträger mit allzu großer Bauhöhe dadurch vermieden werden, dass die erste und die zweite Transportangriffsfläche in einer im Wesentlichen gemeinsamen Ebene liegende Auflageflächen sind, wobei wenigstens eine aus der ersten und der zweiten Führungseinrichtung eine Führungsnut aufweist, welche zwischen der ersten und der zweiten Transportangriffsfläche vertäuft.

Da Bearbeitungsstraßen häufig zur effektiven Raumausnutzung abgewinkelte Transportstrecken aufweisen, insbesondere mit rechten Winkeln, ist es vorteilhaft, wenn der Werkstückträger im Wesentlichen quadratisch ausgebildet ist, da dann seine Förderrichtung mit einer Hub-Quer-Einheit um 90° abgelenkt werden kann, ohne dass auf die Orientierung des Werkstückträgers geachtet werden müsste.

In diesem Falle ist es vorteilhaft, wenn ein Außenrandabschnitt einer jeden Seite des quadratischen Werkstückträgers eine Anlagefläche aufweist, so dass jede Seite des quadratischen Werkstückträgers zum gleitenden Anlageeingriff mit einer entsprechenden Gegenfläche der Führungsgeometrie der Bearbeitungsstraße gelangen kann. Dann kommt es wiederum auf die Orientierung des Werkstückträgers relativ zur Transportvorrichtung nicht an.

Um den Werkstückträger von einer Transportstrecke abzunehmen und ihn ggf. auf eine andere Transportstrecke oder in ein Prozessnest oder dergleichen einzusetzen, ist es vorteilhaft, wenn er wenigstens eine Eingriffsausnehmung zum Eingriff mit einer Umsetzeinrichtung aufweist. Hierzu kann er aus Gründen einer Vereinheitlichung vorteilhafterweise wenigstens eine Positionierbuchse umfassen, die die wenigstens eine Eingriffsausnehmung aufweist. Hierdurch könnte die Buchse als Massenprodukt bearbeitet oder sogar schon fertig bearbeitet mit niedrigen Kosten eingekauft werden, so dass eine aufwändige Bearbeitung des Werkstückträgers zur Bildung von Eingriffsausnehmungen nicht notwendig ist. Außerdem können so verschlissene oder sonstwie defekte Positionierbuchsen einfach gegen intakte ausgetauscht werden, was eine Reparatur des Werkstückträgers erheblich erleichtert.

Im Falle der vorteilhaften Verwendung von quadratischen Werkstückträgern sollte vorzugsweise im Bereich jeder Seite des Werkstückträgers wenigstens eine Eingriffsausnehmung vorgesehen sein.

Ein vorteilhafter kompakter Werkstückträger kann dadurch erhalten werden, dass die wenigstens eine Eingriffsausnehmung im Bereich der ersten oder der zweiten Transportangriffsfläche ausgebildet ist.

Gemäß einer vorteilhaften Weiterbildung- der vorliegenden Erfindung weist die Eingriffsausnehmung an ihrer Fangstift-Einführöffnung eine Einführhilfe auf, um das Einführen von Fangstiften zu erleichtern. Hierzu kann die Eingriffsausnehmung im Bereich ihrer Fangstift-Einführöffnung mit entgegen der Fangstift-Einführrichtung größer werdenden Durchmessern ausgebildet sein. Beispielsweise kann die Fangstift-Einführöffnung bei Betrachtung eines die Achse der Eingriffsausnehmung enthaltenden Querschnitts abgerundet ausgebildet sein und einen vorbestimmten Radius aufweisen.

Zum möglichst flexiblen Einsatz in Bearbeitungsstraßen kann der Werkstückträger derart ausgebildet sein, dass er einen austauschbare drahtlos auslesbaren Datenspeicher aufweist, welcher mit Werkstückdaten oder/und Bearbeitungsdaten oder/und Handhabungsdaten oder/und Prozessablaufdaten beschreibbar ist. In diesem Falle kann der Datenspeicher an einer vorbestimmten Bearbeitungsstation ausgelesen werden und anhand der ausgelesenen Daten ein Werkstück erkannt oder/und eine aus mehreren möglichen Bearbeitungsfolgen ausgewählt werden. Darüber hinaus kann der Datenspeicher auch beschreibbar ausgeführt sein, so dass die Bearbeitungsstation Daten auf diesen schreiben kann, vorzugsweise ebenfalls drahtlos. Dies kann zur Erhöhung der Qualitätssicherheit an der Bearbeitungsstraße genutzt werden.

Grundsätzlich kann der Datenspeicher ein beliebiger Datenspeicher sein, etwa ein Balkencode, ein Magnetstreifen und dergleichen. Vorzugsweise ist der Datenspeicher ein RFID-Chip, welcher gestattet, eine verhältnismäßig große Datenmenge auch über Entfernungen von mehreren Zentimetern drahtlos und berührungslos auszulesen. Ein RFID-Chip kann auch beschreibbar sein.

Grundsätzlich kann daran gedacht sein, dass der Datenspeicher außen an dem Werkstückträger aufgebracht ist. Zur Sicherheit des Datenspeichers vor äußeren Einflüssen ist es jedoch vorteilhaft, wenn, der Werkstückträger wenigstens zweiteilig ausgebildet ist, wobei ein Teil, vorzugsweise ein Eckbereich des Werkstückträgers, den Datenspeicher hält.

Um zu vermeiden, dass der Datenspeicher durch die bloße Transportbewegung des Werkstückträgers unerwünschterweise von diesem gelöst wird, kann der den Datenspeicher tragende Teil von dem verbleibenden Werkstückträgerteil in einer zur Führungsrichtung orthogonalen Richtung abnehmbar sein.

Aus Gründen verbesserter Robustheit ist es vorteilhaft, wenn der

Werkstückträger im Wesentlichen aus Metall hergestellt ist. Dies soll nicht ausschließen, dass auch Kunststoffteile an diesem vorgesehen sind, etwa zur Aufnahme des Werkstücks. Jedoch sollte der Werkstückträger mehrheitlich aus Metall hergestellt sein. Vorteilhaft ist hier insbesondere die Verwendung eines besonders dichten Metalls, wie etwa Stahl, da der Werkstückträger dann eine vorteilhafte hohe Massenträgheit aufweist, so dass etwa die oben angesprochene Umsetzeinrichtung in die Eingriffsausnehmungen mit schneller Bewegung eingreifen kann. Dann braucht auf Grund der erhöhten Trägheit des Werkstückträgers und der daraus bei hoher Beschleunigung wirkenden Trägheitskräfte kein gesonderter Niederhalter vorgesehen werden, um einen Eingriff des Umsetzers mit dem Werkstückträger zu gewährleisten. Es sind aber auch Werkstückträger aus Aluminium denkbar.

Die vorliegende Erfindung wird im Folgenden anhand der beiliegenden Zeichnungen näher beschrieben werden. Es stellt dar:
- Fig. 1: zeigt einen Bearbeitungsplatz einer Bearbeitungsstraße, an welcher eine erfindungsgemäße Ausführungsform eines Werkstückträgers zum Einsatz kommt,
- Fig. 2: zeigt einen Moduleinschub mit Transportvorrichtungen und einem Prozessnest des Bearbeitungsplatzes aus Fig. 1,
- Fig. 3: zeigt eine perspektivische Explosionsansicht einer Baugruppe aus Transportvorrichtung, Werkstückträger-Umsetzeinrichtungen und Prozessnest des Moduleinschubs von Fig. 2,
- Fig. 4: zeigt eine Draufsicht auf die Baugruppe von Fig. 3,
- Fig. 5: zeigt eine perspektivische Ansicht einer Umsetzeinrichtung, welche mit einer erfindungsgemäßen Ausführungsform eines Werkstückträgers in Eingriff ist,
- Fig. 6: zeigt eine Vorderansicht der Umsetzeinrichtung mit Werkstückträger von Fig. 5,
- Fig. 7: zeigt eine Draufsicht auf einen erfindungsgemäßen Werkstückträger,
- Fig. 8: zeigt eine Schnittansicht des Werkstückträgers von Fig. 7 entlang der Linie VII-VII,
- Fig. 9: zeigt eine Unteransicht des Werkstückträgers von den Figuren 7 und 8,
- Fig. 10: zeigt eine perspektivische Explosionsansicht des Werkstückträgers der Figuren 7 bis 9,
- Fig. 11: zeigt eine Detail-Querschnittsansicht des Werkstückträgers der Figuren 7 bis 10 auf einer zweiten Transportvorrichtung, welche von jenen der Figuren 1 bis 4 verschieden ist, und
- Fig. 12: zeigt eine der Fig. 11 entsprechende Detail-Querschnittsansicht eines Werkstückträgers der Figuren 7 bis 10 auf einer Transportvorrichtung, wie sie in den Figuren 1 bis 4 dargestellt ist.

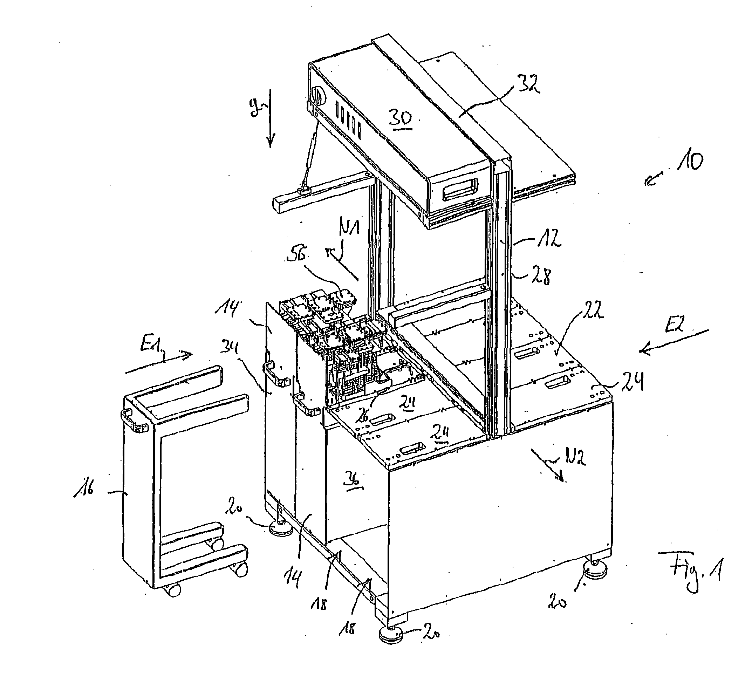

In Fig. 1 ist eine erfindungsgemäße Ansicht eines allgemein mit 10 bezeichneten Bearbeitungsplatzes gezeigt.

Der Bearbeitungsplatz 10, welcher Bestandteil einer nicht dargestellten Bearbeitungsstraße sein kann, dient zur Bearbeitung und Handhabung von Werkstücken, beispielsweise zur Montage von Kleingeräten, wie etwa Bohrmaschinengetrieben und ähnlichem. Der Bearbeitungsplatz 10 umfasst ein Gerüst 12, welches als eine Modulplattform dient, in die Moduleinschübe 14 längs einer ersten Einführrichtung E1 einschiebbar sind. Hierzu wird ein Moduleinschub 14 mit einem Hilfswagen 16 vor die gewünschte Modulaufnahme 18 gestellt und darin längs der ersten Einführrichtung E1 in die Modulplattform 12 eingeschoben.

Die Modulplattform 12 ist derart aufgebaut, dass vier Moduleinschübe 14 nebeneinander längs der ersten Einführrichtung E1 in die Modulplattform einschiebbar sind und dass vier weitere Moduleinschübe auf der gegenüberliegenden Seite der Modulplattform 12 längs einer zweiten Einführrichtung E2 in die Modulplattform einschiebbar sind. Die Einführrichtungen E1 und E2 sind einander entgegengesetzt.

Die Modulplattform 12 ruht auf höhenverstellbaren Füßen 20, so dass eine Grundfläche 22 der Modulplattform bezüglich der Schwerkraftwirkungsrichtung ausgerichtet werden kann, vorzugsweise derart, dass die Grundfläche 22 "im Wasser" ist

Die Grundfläche 22 ist gebildet aus insgesamt acht ebenen Grundplatten 24, welche alle eine gemeinsame Auflageebene bilden. Jede Grundplatte 24 ist dabei einer Modulaufnahme 18 zugeordnet.

Die Moduleinschübe 14 umfassen Modul-Grundplatten 26, welche dann, wenn der Moduleinschub 14 in die Modulplattform 12 eingeschoben ist, im Wesentlichen flächig auf der Grundplatte 24 aufliegen.

Die Modulplattform 12 weist an einem die Grundfläche 22 überragenden Obergestell 28 einen Schaltkasten 30 auf, welcher eine Steuer/Regeleinrichtung umfasst, die mit den Moduleinschüben 14 kommuniziert, wenn diese in die Modulplattform 12 eingeschoben sind. Darüber hinaus ist ein über die Breite der Modulplattform 12 reichender Kabelkanal 32 vorgesehen, in welchem Versorgungs- und Datenübertragungsleitungen für eine Bearbeitungsstraße angeordnet werden können.

In Richtung der Pfeile N1 und N2 neben dem Bearbeitungsplatz 10 können weitere gleichartige oder ähnliche Bearbeitungsplätze zur Bildung einer Bearbeitungsstraße vorgesehen sein.

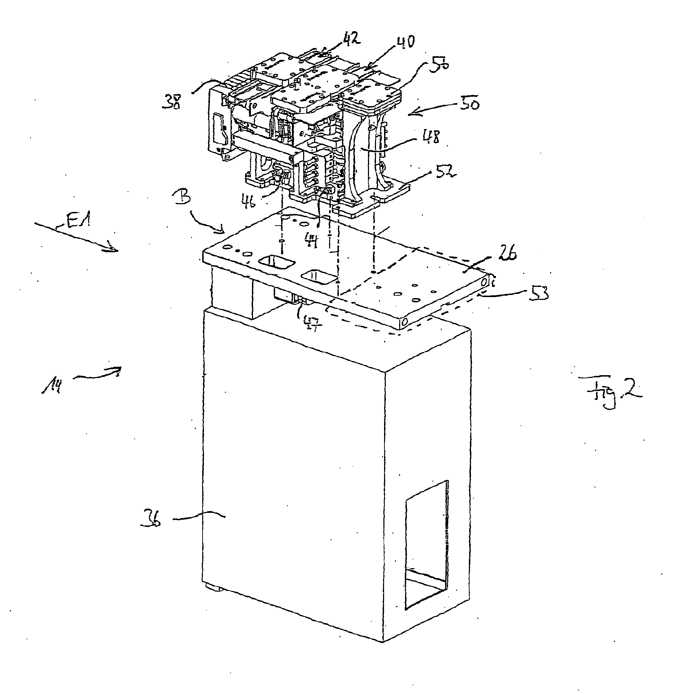

In Fig. 2 ist eine perspektivische Explosionszeichnung des Moduleinschubs 14 dargestellt, wobei die bedienerseitige Platte 34 (s. Fig. 1) der Übersichtlichkeit halber weggelassen ist.

Der Moduleinschub 14 umfasst ein Steuergehäuse 36, in welches Steuer/Regeleinheiten aufgenommen werden können, welche zur Steuerung von nicht dargestellten Bearbeitungs- oder/und Handhabungsgeräten ausgebildet sein können, die auf der Modul-Grundplatte 26 angeordnet sein können. Die in dem Steuergehäuse 36 vorgesehenen Steuer/Regeleinheiten können auch zur Ansteuerung von einer an dem Moduleinschub 14 vorgesehenen Ventilinsel 38, einer ersten Transportstrecke 40, einer zweiten Transportstrecke 42 sowie zur Steuerung einer Prozess-Umsetzeinrichtung 44 und einer Transportstrecken-Umsetzeinrichtung 46 ausgebildet sein. Die Steuer/Regeleinheiten können mit dem Schaltkasten 30 und der darin vorgesehenen Steuer/Regeleinrichtung über einen Hybridstecker 47 verbunden sein, welcher dann, wenn der Moduleinschub 14 in die Modulplattform 12 eingeschoben ist, in eine an der Modulplattform 12 vorgesehene, nicht dargestellte Hybridsteckbuchse eingeschoben ist. Die Ventilinsel 38, die Transportstrecken 40, 42 und die Umsetzeinrichtungen 44, 46 können alternativ über einen Elektro-Stecker ohne Zwischenanordnung einer Steuer/Regeleinheit im Steuergehäuse 36 auch unmittelbar mit der Steuer/Regeleinrichtung im Schaltkasten 30 verbunden sein.

Der Hybridstecker 47 umfasst einen Elektro-Stecker für Stromversorgungs-und Datenübertragungsleitungen und einen Pneumatik-Stecker 49, welcher beim Einschieben des Moduleinschubs 14 in die Modulplattform 12 eine Steckverbindung mit einer in der Hybridsteckbuchse vorgesehenen Pneumatik-Steckbuchse bildet, um Druckluft bis zur Ventilinsel 38 zu übertragen. Dort kann die Druckluft je nach Ansteuerung der in der Ventilinsel 38 angeordneten Pneumatik-Schaltventile selektiv weitergeleitet werden.

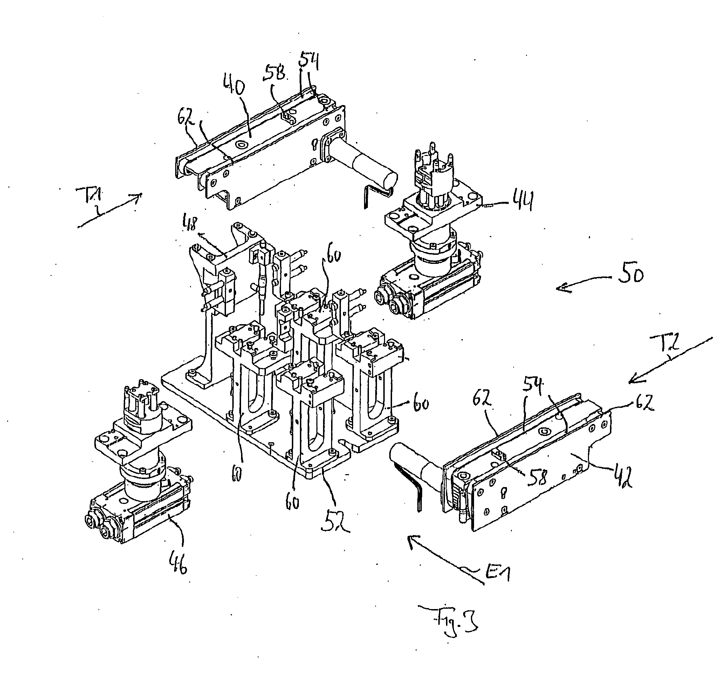

Die Ventilinsel 38, die Transportstrecken 40 und 42, die Umsetzer 44 und 46 (s. auch Fig. 3) sowie ein Prozessnest 48 sind als vormontierte Baugruppe 50 auf die Modul-Grundplatte 26 montiert. Die vormontierte Baugruppe 50 umfasst hierzu eine gemeinsame Baugruppen-Grundplatte 52, welche die Komponenten der vormontierten Baugruppe 50 trägt.

Die vormontierte Baugruppe 50 ist dabei derart auf die Modul-Grundplatte 52 montiert, dass die Ventilinsel 38 näher an der Bedienerseite B des Moduleinschubs 14 gelegen ist. Dadurch kann vermieden werden, dass evtl. ölhaltige Abluft aus den Pneumatik-Schaltventilen der Ventilinsel 38 zu Bearbeitungs- oder/und Handhabungsgeräten gelangt, die in Einführrichtung E1 hinter dem Prozessnest 48 anordenbar sind. Zu deren Anordnung ist auf der Modul-Grundplatte 26 ein strichliniert angedeuteter Prozessbereich 53 reserviert. Zur Erleichterung der Anordnung von entsprechenden Bearbeitungs- oder/und Handhabungsgeräten können Bohrungen oder/und Löcher oder/und Nuten in der Modul-Grundplatte 26 vorgesehen sein.

In Fig. 3 ist die vormontierte Baugruppe 50 in einer Explosionsansicht gezeigt. Die Ventilinsel 38 ist in der Ansicht der Fig. 3 weggelassen.

Die erste Transportstrecke 40 und die zweite Transportstrecke 42 sind im Wesentlichen identisch aufgebaut und sind aus einer Doppelgurtfördereinrichtung gebildet. Hierzu umfasst die auch stellvertretend für die erste Transportstrecke 40 beschriebene zweite Transportstrecke 42 zwei mit Abstand voneinander verlaufende parallel angeordnete Gurtförderbänder 54. Die zweite Transportstrecke 42 ist dazu vorgesehen, Werkstückträger 56 (s. Fig. 1 oder 2) längs einer zweiten Transportrichtung T2 zu bewegen. Dementsprechend ist die erste Transportstrecke 40 dazu ausgebildet, Werkstückträger in die entgegengesetzte erste Transportrichtung T1 zu fördern.

Die zweite Transportstrecke 42 umfasst ebenso wie die erste Transportstrecke 40 einen selektiv zwischen einer Haltestellung und einer Durchlassstellung verstellbaren Anschlag 58, welcher im ausgefahrenen Zustand als Anschlag für auf den Transportstrecken 40 und 42 beförderte Werkstückträger dient und im eingefahrenen Zustand von diesen Werkstückträgern überfahren wird.

Wie das Prozessnest 48 sind verschiedene Einzelträger 60 auf die Baugruppen-Grundplatte 42 aufgeschraubt. Die Träger 60 dienen zur Aufnahme der Transportstrecken 40 und 42 und der Umsetzer 44 und 46. Gemäß einer nicht dargestellten vorteilhaften Weiterbildung der vorliegenden Erfindung können die vier Einzelträger 60 auch zu einer integralen Trägeranordnung zusammengefasst sein.

Durch die in Fig. 3 gezeigte Anordnung können die Transportstrecken 40 und 42, die Umsetzer 44 und 46 sowie das Prozessnest 48 ideal zueinander ausgerichtet werden, bevor der die Baugruppe 50 aufnehmende Moduleinschub 14 in eine Modulplattform, 12 eingeschoben wird.

Der in Fig. 3 gezeigte Umsetzer 46 ist ein Transportstrecken-Umsetzer, welcher dazu ausgebildet ist, Werkstückträger 56 von der ersten Transportstrecke 40 zur zweiten Transportstrecke 42 umzusetzen und umgekehrt. Hierzu hebt der Umsetzer 46 den Werkstückträger auf einer Transportstrecke an, bis der Werkstückträger außer Eingriff mit den Führungsleisten 62 der Transportstrecken 40 und 42 gelangt. Dann verschwenkt der Umsetzer 46 den Werkstückträger 56 um 180° und setzt ihn zwischen den Führungsleisten 62 der jeweils anderen Transportstrecke ab. Daraus folgt, dass die Transportstrecken 40 und 42 in einem von der Größe des Werkstückträgers 56 bestimmten Abstand voneinander angeordnet ist, wobei die Drehachse des Umsetzers 46 in der Mitte mit gleichem Abstand von den Transportstrecken 40 und 42 angeordnet ist.

Der Umsetzer 44 ist dagegen ein Prozess-Umsetzer, welcher dazu ausgebildet ist, Werkstückträger von der ersten Transportstrecke 40 zum Prozessnest 48 umzusetzen und umgekehrt. Hierdurch kann ein Werkstückträger von der Transportstrecke entnommen und unabhängig von Transportvorgängen auf der ersten Transportstrecke am Prozessnest 48 durch Bearbeitungs- oder/und Handhabungsgeräte bearbeitet werden.

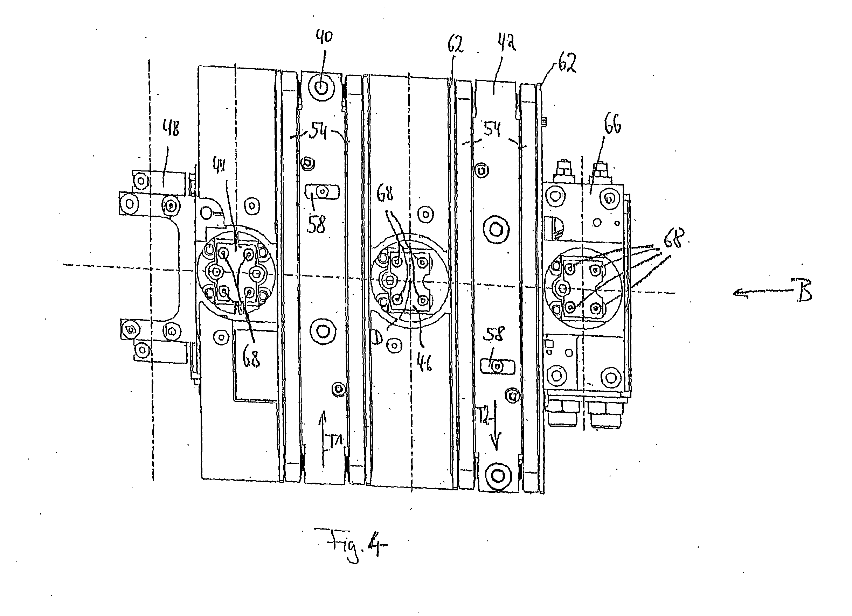

In Fig. 4 ist eine Draufsicht auf die erste und die zweite Transportvorrichtung 40, 42, die Prozess-Umsetzeinrichtung 44, die Transportstrecken-Umsetzeinrichtung 46 und das Prozessnest 48 dargestellt. Weiterhin ist eine dritte Umsetzeinrichtung 66 dargestellt, welche einen nicht dargestellten Werkstückträger von der zweiten Transportstrecke 42 zu der von dem Prozessnest 48 wegweisenden Seite, d.h. zur Bedienerseite B hin, verschwenken kann. Jede der Umsetzeinrichtungen 44, 46, 66 weist insgesamt vier Fangstifte 68 auf, welche zum Umsetzen eines Werkstückträgers in diesen eingreifen. Die Stifte 68 sind im Wesentlichen gleichartig und sind nur unterschiedlich orientiert an den jeweiligen Umsetzeinrichtungen angeordnet.

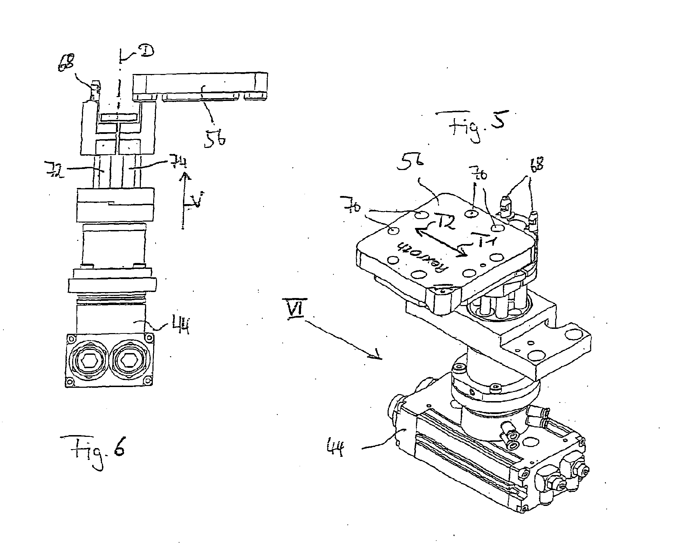

Zum Umsetzen eines Werkstückträgers greifen jeweils nur zwei von vier Stiften 68 einer Umsetzeinrichtung in entsprechende Ausnehmungen 70 (s. auch Fig. 5) des Werkstückträgers 56 ein. Dabei bilden stets in Transportrichtung T1 und T2 mit Abstand voneinander angeordnete Stifte 68 derartige Eingriffspaare. Die Drehachse der Transportstrecken-Umsetzeinrichtung 46 ist in Fig. 4 mit D bezeichnet. Sie ist orthogonal zur Zeichenebene der Fig. 4. Die Drehachse D hat den gleichen Abstand zur ersten Transportstrecke 40 wie zur zweiten Transportstrecke 42. Ein von den Transportstrecken 40 und 42 bewegter Werkstückträger muss zumindest so breit sein, dass die der jeweiligen Transportstrecke, auf welcher der Werkstückträger bewegt wird, näher liegenden Stiftepaare der Stifte 68 in diesen eingreifen können. Damit wahlweise der Werkstückträger 56 sowohl von der Transportstrecken-Umsetzeinrichtung 46 wie auch von der Prozess-Umsetzeinrichtung 44 oder der dritten Umsetzeinrichtung 46 erfasst werden kann (je nachdem, auf welcher Transportstrecke er sich befindet), ragt der Werkstückträger vorzugsweise zu beiden Seiten der Transportstrecken 40 und 42 ein entsprechendes Maß über die Transportstrecken hinaus.

So, wie sich die Transportstrecken-Umsetzeinrichtung 46 in der Mitte zwischen der ersten und der zweiten Transportstrecke 40 bzw. 42 befindet, ist die Prozess-Umsetzeinrichtung 44 in der Mitte des Abstands angeordnet, welchen das Prozessnest 48 von der ersten Transportstrecke 40 hat.

Damit es auf die Orientierung eines Werkstückträgers 56 auf den Transportstrecken 40, 42 nicht ankommt, werden vorzugsweise im Wesentlichen symmetrische Werkstückträger 56 mit quadratischer Grundfläche verwendet, welche auf jeder Seite Ausnehmungen 70 zum Eingriff der Stifte 68 aufweisen.

Es wird darauf hingewiesen, dass die Drehachsen D aller Umsetzeinrichtungen 44, 46 und 66 in Fig. 4 mit gleichem Abstand zur jeweils nächstliegenden zugeordneten Transportstrecke angeordnet sind.

In Fig. 5 ist die Prozess-Umsetzeinrichtung 44 in der Perspektive dargestellt. Die Prozess-Umsetzeinrichtung 44 in Fig. 5 befindet sich im Eingriff mit dem Werkstückträger 56 mit im Wesentlichen quadratischer Grundfläche. Zu erkennen sind die Ausnehmungen 70 zum Eingriff mit den Stiften 68 der Prozess-Umsetzeinrichtung 44.

In Fig. 6 ist eine Vorderansicht länge des Pfeils VI aus Fig. 5 der Prozess-Umsetzeinrichtung 44 dargestellt.

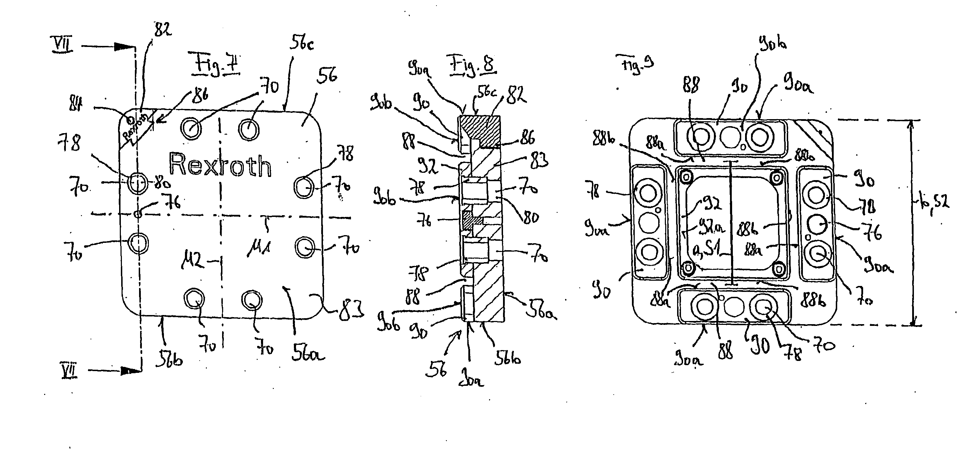

Bei den im dargestellten Beispiel verwendeten Umsetzeinrichtungen 44, 46 und 66 handelt es sich um sogenannte Hub-Dreh-Einheiten, welche nach Ineingriffnahme eines Werkstückträgers 56 diesen in Richtung des Pfeils V längs ihrer Drehachse D anheben und um 180° um diese Drehachse D verschwenken. Zum Anheben von Werkstückträgern 56 weist die Prozess-Umsetzeinrichtung 44 zwei gesondert voneinander betätigbare Hubsysteme 72 und 74 auf, wodurch sichergestellt ist, dass ein im Prozessnest 48 aufgenommener Werkstückträger von einer der Hubeinrichtungen 72 oder 74 ergriffen und angehoben werden kann, ohne dass die jeweils andere Hubeinrichtung mit angehoben wird und somit in den Bewegungsweg eines längs der ersten Transportstrecke 40 bewegten Werkstückträgers ragt. Hierdurch wird sichergestellt, dass die Transportfunktion der Transportstrecke 40 erhalten bleibt, unabhängig davon, ob sich im Prozessnest 48 ein Werkstückträger befindet oder nicht. Hierdurch können Werkstückträger aus der Transportstrecke 40 einen im Prozessnest 48 aufgenommenen Werkstückträger passieren. In Fig. 7 ist der Werkstückträger 56 in der Draufsicht dargestellt. Der Werkstückträger 56 ist im Wesentlichen quadratisch mit abgerundeten Ecken. Die Abrundung der Ecken dient dazu, den Schwenkradius bei einem Verschwenken des Werkstückträgers durch eine Umsetzeinrichtung um die Schwenkachse D zu verkürzen.

In Fig. 7 blickt man auf die Werkstückaufnahmefläche 56a des Werkstückträgers 56. Diese Werkstückaufnahmefläche 56a kann mit einer Vorrichtung zur Aufnahme eines Werkstücks in einer bestimmten Lage oder/und Orientierung versehen sein.

Der Werkstückträger 56 weist insgesamt acht Eingriffsausnehmungen 70 zum Eingriff mit den Fangstiften 68 aus. Diese Eingriffsausnehmungen 70 sind paarweise an jeder der vier Seiten symmetrisch zu den beiden zueinander orthogonalen Mittelachsen M1 und M2 des Werkstückträgers 56 vorgesehen.

Zwischen den in Fig. 7 linken Eingriffsausnehmungen 70, die von der Schnittlinie VII-VII durchsetzt werden, ist ein Erkennungsteil 76 angeordnet, welches durch Näherungsschalter, die sich in der Nähe der jeweiligen Werkstückträgerseite befinden, erfasst wird. Derartige Erkennungsteile 76 können auch zwischen den übrigen Paaren von Eingriffsausnehmungen 70 vorgesehen sein.

Jede Eingriffsausnehmung 70 umfasst eine Positionierbuchse 78, welche in eine Bohrung 80 des Werkstückträgers 56 eingesetzt ist.

Darüber hinaus weist der Werkstückträger 56 ein von ihm abnehmbares Teil 82 auf, in welchem ein RFID-Chip 84 als drahtlos auslesbarer Datenspeicher aufgenommen ist. Der abnehmbare Teil 82 kann in den verbleibenden Restkörper 83 des Werkstückträgers 56 längs einer Schwalbenschwanzführung 86 eingeführt und von diesem abgenommen werden. Die Einführrichtung ist dabei orthogonal zur Zeichenebene der Fig. 7 und damit orthogonal zu jeder möglichen Transportrichtung des Werkstückträgers 56.

In Fig. 8 ist der Werkstückträger 56 längs der Linie VII-VII von Fig. 7 geschnitten dargestellt. Zu erkennen sind Führungsnuten 88, welche parallel zueinander sowie parallel zu den parallelen Seiten 56b und 56c verlaufen. Jede Führungsnut 88 weist dabei aufeinander zu weisende Anlageflächen 88a und 88b auf, welcher zum Eingriff mit entsprechenden Gegenanlageflächen der Führungsschienen 62 der Transportstrecken 40 und 42 ausgebildet sind (s. Fig. 4). Diese Führungsnuten sind durch gleichartige Randauflageelemente 90 und ein zentrales Auflageelement 92 gebildet, welche auf der der Werkstückaufnahmefläche 56a entgegengesetzten Fläche des Werkstückträgers 56 vorgesehen sind. Jede seitliche Begrenzungsfläche des zentralen Auflageelements 92 umfasst dabei eine Anlagefläche 88b und jede zum zentralen Auflageelement 92 hinweisende seitliche Begrenzungsfläche der Randauflageelemente 90 umfasst eine weitere Anlagefläche 88a. Die Führungsnuten 88 und die sie bildenden Anlageflächen 88a und 88b bilden eine erste Führungseinrichtung im Sinne der vorliegenden Anmeldung.

Weiterhin umfassen die den Anlageflächen 88a entgegengesetzten vom zentralen Auflageelement 92 weg weisenden Seitenflächen der Randauflageefemente 90 jeweils eine Außenführungs-Anlagefläche 90a. Diese Außenführungs-Anlageflächen 90a bilden eine zweite Führungseinrichtung im Sinne der vorliegenden Anmeldung, wobei der Abstand a zwischen den Quermitten zweier paarweise paralleler Führungsnuten 88 eine erste Spurweite S1 definiert und der Abstand b zwischen zwei paarweise parallelen Außenführungs-Anlageflächen 90a eine zweite Spurweite S2 definiert.

Obwohl in der Darstellung der Figuren 8 und 9 die Anlageflächen 88a, 88b und 90a zueinander parallel ausgebildet dargestellt sind, ist dies nicht zwingend notwendig. Die Anlageflächen 88a, 88b und 90a, die jeweils längs einer gemeinsamen Führungsrichtung verlaufen, können auch zueinander um eine in Führungsrichtung verlaufende Neigeachse geneigt ausgebildet sein.

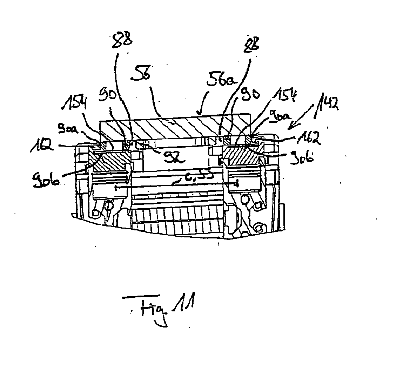

Die relativ zur Werkstückaufnahmefläche 56a weg weisende Auflagerfläche 92a (s. Fig. 9) des zentralen Auflageelements 92 bildet eine Transporteingriffsfläche zum Eingriff mit den Bändern 54 der Transportstrecken 40 und 42. Im Gegensatz dazu bilden die Auflageflächen 90b der Randauflageelemente 90 Transporteingriffsflächen zum Auflageeingriff mit einer weiteren Transportstrecke, die in Fig. 11 gezeigt ist.

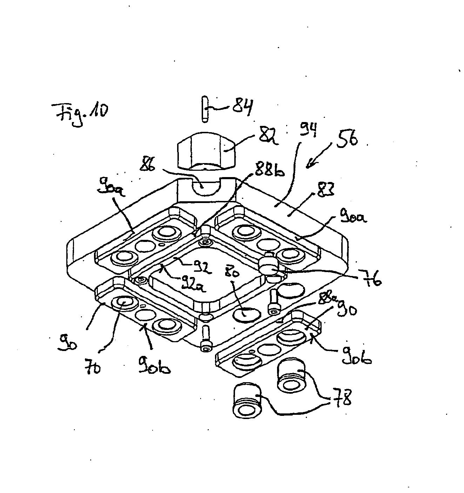

In Fig. 10 ist eine perspektivische Explosionsansicht des Werkstückträgers 56 von schräg unten gezeigt. Dabei ist zu erkennen, dass das zentrale Auflageelement 92 auf eine Werkstückträger-Grundplatte 94 aufgeschraubt ist. Die Randauflageelemente 90 sind dagegen mit der Werkstückträger-Grundplatte 94 verklebt. Alternativ oder zusätzlich können auch diese mit der Werkstückträger-Grundplatte 94 verschraubt sein.

Die Werkstückträger-Grundplatte 94 sowie alle Auflageelemente 90 und 92 sind vorzugsweise aus Stahl hergestellt, um dem Werkstückträger 56 eine möglichst große träge Masse zu verleihen. Dann können nämlich die Fangstifte 68 der Umsetzeinrichtungen 44 und 46 mit hoher Geschwindigkeit in die Eingriffsausnehmungen 70 einfahren, ohne dass ein den Einführkräften entgegenwirkender körperlicher Niederhalter vorgesehen werden muss, da die bei einer schnellen Einführbewegung der Fangstifte 86 an dem Werkstückträger 56 mit großer Masse entstehenden dynamischen Kräfte wie Niederhalterkräfte wirken.

Das den Datenspeicher 84 (RFID-Chip) aufnehmende abnehmbare Werkstückträgerteil 82 kann ebenfalls aus Stahl, einem sonstigen Metall oder auch aus Kunststoff hergestellt sein. Um für eine definierte Position des Werkstückträgerteils 82 relativ zum verbleibenden Werkstückträgerrest 83 zu sorgen, durchsetzt die Schwalbenschwanzführung 86 die Werkstückträger-Grundplatte 94 nicht. Vielmehr ist dort ein Endanschlag in Aufschieberichtung für das den RFID-Chip 84 haltende Werkstückträgerteil 82 gebildet.

In Fig. 11 ist eine von den Transportstrecken 40 und 42 verschiedene Transportstrecke 142 gezeigt, welche einen Werkstückträger 56, wie er im Zusammenhang mit den Figuren. 7 bis 10 beschrieben wurde, transportiert.

Die Auflageflächen 90b zweier zueinander parallel verlaufender. Randauflageelemente 90 liegen dabei auf mit Abstand voneinander angeordneten Transportbändern 154 auf. Der Werkstückträger 56 wird von den Transportbändern 154 durch Reibschlusseingriff mitgenommen.

Der Werkstückträger 56 wird dabei durch Außenführung längs der zur Zeichenebene der Fig. 11 orthogonalen Transportrichtung geführt, wobei zu erkennen ist, dass sich die Außenführungs-Anlagefläche 90a in gleitendem Anlageeingriff mit aufeinander zu weisenden Gegenanlageeingriffsflächen an Führungsleisten 162 befinden.

Es ist anzumerken, dass der Abstand c zwischen den Quermitten der Auflageflächen 90b der gemeinsam in Transporteingriff befindlichen Randauflageelemente 90 die Transport-Spurweite S3 des Werkstückträgers 56 für die Transportstrecke 142 definiert.

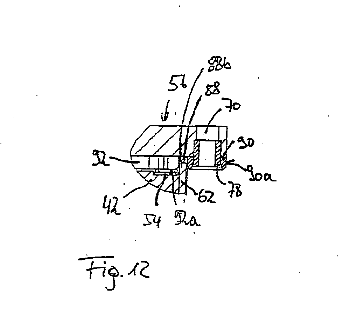

In Fig. 12 ist dagegen die Auflage- und-Transporteingriffssitüation des Werkstückträgers 56 mit der Transportstrecke 42 gezeigt. Hier liegt die Auflagefläche 92a .des zentralen Auflageelements 92 auf den Transportbändern 54 auf. Wiederum wird der Werkstückträger 56 durch Reibschluss zwischen jedem Transportband 54 und der Auflagefläche 92a in einer zur Zeichenebene der Fig. 12 orthogonalen Transportrichtung mitgenommen.

Zur Führung des Werkstückträgers 56 ragt die über die Transportbänder 54 zum Werkstückträger 56 hin hinausstehende Seite der Führungsleisten 62 in eine Führungsnut 88 des Werkstückträgers 56 ein. Im vorliegenden Fall liegt die Anlagefläche 88b des zentralen Auflageelements 92 gleitend an einer zum Transportband 54 hinweisenden Gegenanlagefläche der Führungsleiste 62 an. Wie jedoch in Fig. 4 zu erkennen ist, weist die Transportstrecke 42 zwei zueinander parallele Führungsleisten 62 auf, wobei die der Transportstrecke 42 zugeordnete Spurweite S1 geringfügig größer bemessen ist als der Abstand der Quermitten der parallelen Führungsleisten 62 orthogonal zur Transportrichtung. Darüber hinaus ist jede Führungsnut 88 geringfügig breiter bemessen als die Breite der Führungsleisten 62. Durch diese Maßnahmen können Fertigungstoleranzen am Werkstückträger 56 sowie an den Transportstrecken 40, 42 gut ausgeglichen werden, ohne dass an Führungsgenauigkeit eingebüßt wird.

Alternativ kann die Spurweite S1 auch geringfügig kleiner bemessen sein als der in gleicher Richtung gemessene Abstand der Führungsleisten 62. Dann wird im Gegensatz zur Darstellung der Fig. 12 im Wesentlichen die an den Randauflageelementen 90 ausgebildete Anlagefläche 88a im Zusammenwirken mit einer von den Transportbändern 54 weg weisenden Gegenanlagefläche der Führungsleiste 62 zur Führung des Werkstückträgers 56 längs der Transportrichtung beitragen.

## Patentansprüche

1. Flexible Bearbeitungsstraße, insbesondere Montagestraße, mit einer ersten Transportvorrichtung (40; 42) mit einer ersten in einer Führungsrichtung (T1, T2) verlaufenden Führungsgeometrie (62) und einem Werkstückträger (56) zum Transport von Werkstücken mit einer ersten Führungseinrichtung (88, 88a, 88b) zum Führungseingriffmit der ersten in Führungsrichtung verlaufenden Führungsgeometrie (62), wobei der Werkstückträger (56) eine von der ersten (88, 88a, 88b) gesondert ausgebildete zweite in Führungsrichtung (T1, T2) verlaufende Führungseinrichtung (90a) aufweist, welche zum Führungseingriff mit einer von der ersten (62) verschiedenen zweiten Führungsgeometrie (162) der Bearbeitungsstraße ausgebildet ist, wobei beide Führungseinrichtungen (88, 88a, 88b; 90a) eine in Führungsrichtung (T1, T2) verlaufende Anlagefläche (88a, 88b, 90a) aufweisen, welche der ersten bzw. der zweiten Führungsgeometrie (62, 162) zugeordnet und zur gleitenden Anlage an eine Gegenanlagefläche derselben ausgebildet ist.
**dadurch gekennzeichnet, dass** die Bearbeitungsstraße eine zweite Transportvorrichtung (142) aufweist, wobei an der zweiten Transportvorrichtung (142) nur die zweite Führungsgeometrie (162) vorgesehen ist, während die erste Führungsgeometrie (62) nicht vorhanden ist, und wobei an der ersten Transportvorrichtung (40; 42) nur die erste Führungsgeometrie (62) vorgesehen ist, während die zweite Führungsgeometrie (162) nicht vorhanden ist.

2. Bearbeitungsstraße nach Anspruch 1,
**dadurch gekennzeichnet, dass** die wenigstens eine Führungseinrichtung (88, 88a, 88b; 90a), vorteilhafterweise beide Führungseinrichtungen, zwei in im Wesentlichen in entgegengesetzte Richtungen weisende in Führungsrichtung (T1, T2) verlaufende Anlageflächen (88a, 88b; 90a) aufweist, von welchen jede zur gleitenden Anlage an je eine Gegenanlagefläche einer Führungsgeometrie (62, 162) ausgebildet ist.

3. Bearbeitungsstraße nach Anspruch 2,
**dadurch gekennzeichnet, dass** die erste Führungseinrichtung (88, 88a, 88b) eine erste Führungs-Spurweite (S1) und die zweite Führungseinrichtung (90a) eine von der ersten Führungs-Spurweite (S1) verschiedene zweite Führungs-Spurweite (S2) aufweist.

4. Bearbeitungsstraße nach einem der Ansprüche 1 bis 3,
**dadurch gekennzeichnet, dass** wenigstens eine Führungseinrichtung (88, 88a, 88b) wenigstens eine in Führungsrichtung (T1, T2) verlaufende Führungsnut (88) aufweist.

5. Bearbeitungsstraße nach einem der Ansprüche 1 bis 4,
**dadurch gekennzeichnet, dass** wenigstens eine Führungseinrichtung (88, 88a, 88b) wenigstens eine in Führungsrichtung (T1, T2) verlaufende Führungsschiene aufweist.

6. Bearbeitungsstraße nach einem der Ansprüche 1 bis 5,
**dadurch gekennzeichnet, dass** der Werkstückträger (56) zueinander orthogonale Anlageflächen (88a, 88b; 90a) oder/und Führungsnuten (88) oder/und Führungsschienen aufweist, vorzugsweise zueinander orthogonale Anlageflächenpaare (88a, 88b; 90a) oder/und Führungsnutenpaare (88) oder/und Führungsschienenpaare aufweist.

7. Bearbeitungsstraße nach einem der vorhergehenden Ansprüche,
**dadurch gekennzeichnet, dass** der Werkstückträger (56) eine erste Transportangriffsfläche (92a) aufweist, welche zum Transporteingriffmit der ersten Transportvorrichtung (40, 42) ausgebildet ist, und dass er eine von der ersten verschiedene zweite Transportangriffsfläche (90a) aufweist, welche zum Transporteingriff mit der von der ersten Transportvorrichtung (40, 42) verschiedenen zweiten Transportvorrichtung (142) ausgebildet ist, wobei vorzugsweise die erste Transportangriffsfläche (92a) eine erste Transport-Spurweite aufweist und die zweite Transportangriffsfläche (90b) eine von der ersten Transport-Spurweite verschiedene zweite Transport-Spurweite (S3) aufweist.

8. Bearbeitungsstraße nach Anspruch 7,
**dadurch gekennzeichnet, dass** die erste (92a) oder/und die zweite Transportangriffsfläche (90b) eine in Schwerkraftwirkungsrichtung weisende Auflagefläche ist.

9. Bearbeitungsstraße nach Anspruch 8, unter Einbeziehung des Anspruchs 4,
**dadurch gekennzeichnet, dass** die erste (92a) und die zweite Transportangriffsfläche (90b) in einer im Wesentlichen gemeinsamen Ebene liegende Auflageflächen sind, wobei eine aus der ersten (88, 88a, 88b) und der zweiten Führungseinrichtung (90a) eine Führungsnut (88) aufweist, welche zwischen der ersten (92a) und der zweiten Transportangriffsfläche (90b) verläuft.

10. Bearbeitungsstraße nach einem der vorhergehenden Ansprüche,
**dadurch gekennzeichnet, dass** der Werkstückträger (56) wenigstens eine Eingriffsausnehmung (70) zum Eingriff mit einer Umsetzeinrichtung (44, 46, 66) aufweist.

11. Bearbeitungsstraße nach Anspruch 10,
**dadurch gekennzeichnet, dass** der Werkstückträger wenigstens eine Positionierbuchse (78) umfasst, die die wenigstens eine Eingriffsausnehmung (70) aufweist.

12. Bearbeitungsstraße nach einem der vorhergehenden Ansprüche,
**dadurch gekennzeichnet, dass** der Werkstückträger einen austauschbaren drahtlos auslesbaren Datenspeicher (84) aufweist, welcher mit Werkstückdaten oder/und Bearbeitungsdaten oder/und Handhabungsdaten oder/und Prozessablaufdaten beschreibbar ist.

13. Bearbeitungsstraße nach Anspruch 12,
**dadurch gekennzeichnet, dass** der Werkstückträger (56) wenigstens zweiteilig ist, wobei ein Teil (82), vorzugsweise ein Eckbereich des Werkstückträgers (56), den Datenspeicher (84) hält.

14. Bearbeitungsstraße nach Anspruch 13,
**dadurch gekennzeichnet, dass** der den Datenspeicher (84) tragende Teil (82) von dem verbleibenden Werkstückträgerteil (83) in einer zur Führungsrichtung (T1, T2) orthogonalen Richtung abnehmbar ist.

## Claims

1. Flexible processing line, in particular assembly line, comprising a first transport device (40; 42) having a first guide geometry (62) running in a guide direction (T1, T2), and comprising a work carrier (56) for transporting workpieces, said work carrier (56) having a first guide means (88, 88a, 88b) for guiding engagement with the first guide geometry (62) running in the guide direction, wherein the work carrier (56) has a second guide means (90a) which is formed separately from the first (88, 88a, 88b) and runs in the guide direction (T1, T2) and which is designed for guiding engagement with a second guide geometry (162), different from the first (62), of the processing line, wherein both guide means (88, 88a, 88b; 90a) have a bearing surface (88a, 88b, 90a) which runs in the guide direction (T1, T2) and which is assigned to the first or the second guide geometry (62, 162) and is designed for bearing against a counter-bearing surface of the same in a sliding manner, **characterized in that** the processing line has a second transport device (142), wherein only the second guide geometry (162) is provided on the second transport device (142), whereas the first guide geometry (62) is not present, and wherein only the first guide geometry (62) is provided on the first transport device (40; 42), whereas the second guide geometry (162) is not present.

2. Processing line according to Claim 1, **characterized in that** the at least one guide means (88, 88a, 88b; 90a), advantageously both guide means, has two bearing surfaces (88a, 88b; 90a) which point essentially in opposite directions and run in the guide direction (T1, T2) and of which each is designed for bearing against a respective counter-bearing surface of a guide geometry (62, 162) in a sliding manner.

3. Processing line according to Claim 2, **characterized in that** the first guide means (88, 88a, 88b) has a first guide track width (S1) and the second guide means (90a) has a second guide track width (S2) different from the first guide track width (S1).

4. Processing line according to one of Claims 1 to 3, **characterized in that** at least one guide means (88, 88a, 88b) has at least one guide groove (88) running in the guide direction (T1, T2).

5. Processing line according to one of Claims 1 to 4, **characterized in that** at least one guide means (88, 88a, 88b) has at least one guide rail running in the guide direction (T1, T2).

6. Processing line according to one of Claims 1 to 5, **characterized in that** the work carrier (56) has bearing surfaces (88a, 88b; 90a) or/and guide grooves (88) or/and guide rails orthogonal to one another, preferably bearing surface pairs (88a, 88b; 90a) or/and guide groove pairs (88) or/and guide rail pairs orthogonal to one another.

7. Processing line according to one of the preceding claims, **characterized in that** the work carrier (56) has a first transport working surface (92a) which is designed for transport engagement with the first transport device (40, 42), and **in that** it has a second transport working surface (90a) which is different from the first and which is designed for transport engagement with the second transport device (142) different from the first transport device (40, 42), wherein preferably the first transport working surface (92a) has a first transport track width and the second transport working surface (90b) has a second transport track width (S3) different from the first transport track width.

8. Processing line according to Claim 7, **characterized in that** the first (92a) or/and the second transport working surface (90b) is a locating surface pointing in the direction of the action of gravity.

9. Processing line according to Claim 8, including Claim 4, **characterized in that** the first (92a) and the second transport working surface (90b) are locating surfaces lying in an essentially common plane, wherein one guide means of the group comprising the first (88, 88a, 88b) and the second guide means (90a) has a guide groove (88) which runs between the first (92a) and the second transport working surface (90b).

10. Processing line according to one of the preceding claims, **characterized in that** the work carrier (56) has at least one engagement aperture (70) for engaging with a transfer device (44, 46, 66).

11. Processing line according to Claim 10, **characterized in that** the work carrier comprises at least one positioning bush (78) which has the at least one engagement aperture (70).

12. Processing line according to one of the preceding claims, **characterized in that** the work carrier has an interchangeable wirelessly readable data store (84) which can be written with workpiece data or/and processing data or/and manipulating data or/and process sequence data.

13. Processing line according to Claim 12, **characterized in that** the work carrier (56) is at least in two parts, wherein one part (82), preferably a corner region of the work carrier (56), holds the data store (84).

14. Processing line according to Claim 13, **characterized in that** the part (82) carrying the data store (84) can be removed from the remaining work carrier part (83) in a direction orthogonal to the guide direction (T1, T2).

## Revendications

1. Chaîne d'usinage flexible, en particulier chaîne de montage, comprenant un premier dispositif de transport (40 ; 42) avec une première géométrie de guidage (62) s'étendant dans une direction de guidage (T1, T2) et un porte-pièces (56) pour le transport de pièces, comprenant un premier dispositif de guidage (88, 88a, 88b) pour l'engagement de guidage avec la première géométrie de guidage (62) s'étendant dans la direction de guidage, le porte-pièces (56) présentant un deuxième dispositif de guidage (90a) réalisé séparément du premier dispositif de guidage (88, 88a, 88b) et s'étendant dans la direction de guidage (T1, T2), qui est réalisé pour l'engagement de guidage avec une deuxième géométrie de guidage (162) de la chaîne d'usinage différente de la première géométrie de guidage (62), les deux dispositifs de guidage (88, 88a, 88b ; 90a) présentant une surface d'appui (88a, 88b, 90a) s'étendant dans la direction de guidage (T1, T2), qui est associée à la première ou à la deuxième géométrie de guidage (62, 162), et qui est réalisée pour l'appui glissant contre une surface d'appui conjuguée de celle-ci,
**caractérisée en ce que** la chaîne d'usinage présente un deuxième dispositif de transport (142), seulement la deuxième géométrie de guidage (162) étant prévue sur le deuxième dispositif de transport (142), tandis que la première géométrie de guidage (62) n'est pas prévue, et seulement la première géométrie de guidage (62) étant prévue sur le premier dispositif de transport (40 ; 42), tandis que la deuxième géométrie de guidage (162) n'est pas prévue.

2. Chaîne d'usinage selon la revendication 1,
**caractérisée en ce que** l'au moins un dispositif de guidage (88, 88a, 88b ; 90a) présente avantageusement les deux dispositifs de guidage, deux surfaces d'appui (88a, 88b ; 90a) s'étendant dans la direction de guidage (T1, T2) et étant tournées essentiellement dans des directions opposées, dont chacune est réalisée pour l'appui glissant contre une surface d'appui conjuguée respective d'une géométrie de guidage (62, 162).

3. Chaîne d'usinage selon la revendication 2,
**caractérisée en ce que** le premier dispositif de guidage (88, 88a, 88b) présente un premier écartement de guidage (S1) et le deuxième dispositif de guidage (90a) présente un deuxième écartement de guidage (S2) différent du premier écartement de guidage (S1).

4. Chaîne d'usinage selon l'une quelconque des revendications 1 à 3,
**caractérisée en ce que** l'au moins un dispositif de guidage (88, 88a, 88b) présente au moins une rainure de guidage (88) s'étendant dans la direction de guidage (T1, T2).

5. Chaîne d'usinage selon l'une quelconque des revendications 1 à 4,
**caractérisée en ce qu'**au moins un dispositif de guidage (88, 88a, 88b) présente au moins un rail de guidage s'étendant dans la direction de guidage (T1, T2).

6. Chaîne d'usinage selon l'une quelconque des revendications 1 à 5,
**caractérisée en ce que** le porte-piècess (56) présente des surfaces d'appui (88a, 88b ; 90a) perpendiculaires les unes aux autres, et/ou des rainures de guidage (88) et/ou des rails de guidage, de préférence des paires de surfaces d'appui (88a, 88b ; 90a) perpendiculaires les unes aux autres et/ou des paires de rainures de guidage (88) et/ou des paires de rails de guidage.

7. Chaîne d'usinage selon l'une quelconque des revendications précédentes,
**caractérisée en ce que** le porte-piècess (56) présente une première surface d'engagement de transport (92a), qui est réalisée pour l'engagement de transport avec le premier dispositif de transport (40, 42), et **en ce qu'**il présente une deuxième surface d'engagement de transport (90a) différente de la première, qui est réalisée pour l'engagement de transport avec le deuxième dispositif de transport (142) différent du premier dispositif de transport (40, 42), la première surface d'engagement de transport (92a) présentant de préférence un premier écartement de transport et la deuxième surface d'engagement de transport (90b) présentant un deuxième écartement de transport (S3) différent du premier écartement de transport.

8. Chaîne d'usinage selon la revendication 7,
**caractérisée en ce que** la première (92a) et/ou la deuxième surface d'engagement de transport (90b) est une surface d'appui tournée dans la direction d'action de la force de pesanteur.

9. Chaîne d'usinage selon la revendication 8, lorsqu'elle se rapporte à la revendication 4,
**caractérisée en ce que** la première (92a) et la deuxième surface d'engagement de transport (90b) sont des surfaces d'appui situées dans un plan essentiellement commun, l'un parmi le premier (88, 88a, 88b) et le deuxième dispositif de guidage (90a) présentant une rainure de guidage (88) qui s'étend entre la première (92a) et la deuxième surface d'engagement de transport (90b).

10. Chaîne d'usinage selon l'une quelconque des revendications précédentes,
**caractérisée en ce que** le porte-piècess (56) présente au moins un évidement d'engagement (70) pour l'engagement avec un dispositif d'inversion (44, 46, 66).

11. Chaîne d'usinage selon la revendication 10,
**caractérisée en ce que** le porte-piècess présente au moins une douille de positionnement (78) qui présente l'au moins un évidement d'engagement (70).

12. Chaîne d'usinage selon l'une quelconque des revendications précédentes,
**caractérisée en ce que** le porte-piècess présente une mémoire de données (84) remplaçable lisible sans fil, qui peut être écrite avec des données relatives aux pièces et/ou des données relatives à l'usinage et/ou des données relatives à la manipulation et/ou des données relatives au déroulement des processus.

13. Chaîne d'usinage selon la revendication 12,
**caractérisée en ce que** le porte-piècess (56) est au moins réalisé en deux parties, une partie (82), de préférence une région de coin du porte-piècess (56), contenant la mémoire de données (84).

14. Chaîne d'usinage selon la revendication 13,
**caractérisée en ce que** la partie (82) portant la mémoire de données (84) peut être enlevée de la partie du porte-piècess (83) qui reste, dans une direction perpendiculaire à la direction de guidage (T1, T2).
